# EUROPEAN PATENT SPECIFICATION

(11) **EP 4 157 718 B1**
(45) Date of publication and mention of the grant of the patent: **22.11.2023**
(21) Application number: 21736682.2
(22) Date of filing: 26.05.2021
(51) Int. Cl.: B64C 27/56

(54) **ASSISTED COLLECTIVE PITCH CONTROL SYSTEM FOR A HELICOPTER ROTOR**
UNTERSTÜTZTES SYSTEM ZUR KOLLEKTIVEN BLATTVERSTELLUNG EINES HUBSCHRAUBERROTORS
SYSTÈME DE CONTRÔLE ASSISTÉ DU PAS COLLECTIF D'UN ROTOR D'HÉLICOPTÈRE

(30) Priority: 29.05.2020 IT 202000012997
(43) Date of publication of application: 05.04.2023
(73) Proprietor: Lamanna Helicopter S.r.l., 35137 Padova (IT)
(72) Inventor: LAMANNA, Roberto, 36040 Grumolo delle Abbadesse (VI) (IT)
(74) Representative: Maroscia, Antonio
(86) International application number: PCT/IB2021/054605
(87) International publication number: WO 2021/240406

(56) References cited:
- EP-A1- 1 544 102
- EP-B1- 1 544 102
- US-A- 3 429 198
- US-A- 4 770 375
- US-A1- 2012 286 088
- US-A1- 2014 265 077

## Description

### Technical field

The present invention generally finds application in the field of rotary wing aircrafts, and particularly relates to an assisted collective pitch control system for a rotor of a ultralight helicopter.

### Background

The vertical lifting force of a helicopter rotor is known to be increased or decreased by the increasing or decreasing of the pitch of all the blades collectively, i.e. by changing the collective pitch.

This change is obtained by lifting or lowering the swashplate by rods connected to a control stick generally located to the left of the pilot seat and also equipped with a throttle knob.

For adequate control of the collective pitch of the rotor, the geometry and aerodynamic forces acting on each blade should be considered. The rotor blades of a helicopter having a symmetric or asymmetric biconvex profile have varying angles of attack along their radial span, leading to longitudinal warping.

Namely, the angle of attack of the blade, which is defined as the angle formed by the chord line of the airfoil of the blade and the direction of the relative wind in the rotating disk of the rotor, is greater at the root of the blade than at the tip, with differences of many degrees, e.g. 6° to 12°.

At rest, the angle of attack at the blade root is generally positive, and the angle of attack at the tip of the same blade is generally negative.

The effect of such twisting, in combination with the different peripheral speeds of each blade section causes lift variations along the blade span.

As a result, the blade tends to spontaneously take a position in space with a mean angle of attack, or pitch, which is referred to as neutral because the lift exerted near the blade root balances the down force exerted near the blade tip.

In this balanced condition, no upward or downward vertical force acts on the rotor as a whole.

The neutral pitch position does not correspond to the fully lowered position of the collective pitch control but to a certain balanced position of the control, i.e. slightly lifted.

From this equilibrium position, each action on the collective pitch stick by the pilot to change the angle of attack of the blades must overcome the natural tendency of each blade to return to its neutral pitch, i.e. zero lift condition.

In practice, if the helicopter has no servo controls, in order to climb the pilot must lift the collective pitch stick by overcoming the tendency of the planes to neutral pitch in addition to drag. The greater the collective pitch to be achieved, the greater the force to be exerted on the stick.

In order to descend, the pilot may reduce the rpm and simultaneously act on the control stick by pushing it downwards with a given force to overcome the tendency of the blades first to increase the collective pitch and then to move to a neutral pitch position.

In practice, if the maximum angular range of the collective control is about 15°, then the neutral pitch position of the blades will correspond to a position lifted by about 5° from the fully lowered bottom position and the pilot will have to exert a progressively increasing force to increase the collective pitch over the next 10°.

In prior art control systems for ultralight small-scale helicopters, at least a partial reduction of the effort exerted on the collective pitch stick is achieved using springs or elastic bands interposed between the collective pitch stick and the frame of the helicopter for elastically returning the stick upwards. Nevertheless, one drawback of these rudimentary devices is that their effectiveness decreases as the stick is lifted by the pilot, just when a higher return force would be needed.

US3429198 discloses a collective pitch control system for a helicopter rotor having a device for adjusting the tendency of the rotor blades to reduce the collective pitch, which device comprises a partially precompressed elastic capsule having a hinge exerting a force against the lever that acts on the shaft of the collective pitch control.

US2014/265077 discloses a force compensation system for counteracting the aerodynamic forces acting on the rotor blades of a helicopter for adjusting the collective pitch, which system comprises a device having a force or torque increasing in the same direction as the displacement.

In ultralight aircrafts with no servo mechanisms, the need is felt to minimize the pilot's effort on the collective pitch control stick to avoid fatigue and distraction during flying activities.

### Technical Problem

In view of the prior art, the technical problem addressed by the present invention is to reduce the effort exerted by the pilot on the collective pitch stick during flight.

### Disclosure of the invention

The object of the present invention is to solve the aforementioned problem by providing a collective pitch control system that is highly efficient and relatively cost-effective.

Another object is to design a collective pitch control system that reduces the effort exerted by the pilot on the collective pitch control stick.

A further object is to simplify and provide a simpler and more effective collective pitch control system in a quick and accurate manner during the flight.

Yet another object is to provide an assisted control system having a relatively simple structure with commonly available components.

These and other objects, as more clearly described hereinafter are fulfilled by an assisted collective pitch control system for a helicopter according to claim 1.

In more details, the system comprises at least one collective pitch stick for a helicopter rotor, in which the helicopter defines a longitudinal axis and in which the stick is rotatably mountable to the helicopter frame to rotate about an axis substantially parallel to a transverse axis of the helicopter; elastic means being provided to act on said at least one stick to exert thereon an auxiliary force tending to reduce the pilot's effort.

The at least one stick has one end rigidly fixed to a shaft which is mounted to rotate about said transverse axis; wherein said shaft is rigidly joined to a connecting arm substantially perpendicular to said transverse axis and axially offset from said at least one stick; wherein said elastic means comprise a spring with one end to be articulated on a fixed point of the helicopter frame and the opposite end fixed to a pin associated with said connecting arm to define the point of application of the reaction force of said spring.

According to the invention, the system comprises a slider slidingly mounted to said connecting arm, said pin being mounted to be rigidly joined to said slider, the system further comprising assisted adjustment means adapted to be controlled by the pilot during the flight and acting on said slider to move said elastic means in such a manner to instantaneously change the point of application of said auxiliary force on said at least one stick.

Advantageously, the system comprises actuator means acting on the slider to adjust the position of the moving pin along the arm.

Preferably, the actuator means comprise a rotating rod mounted to the arm parallel to its longitudinal axis and a slider mounted to said rod and provided with said pin.

Furthermore, the rod is externally threaded and has a gear at one end distal from the slider, said slider being mounted to a nut screw engaged on the threaded rod.

Preferably, the actuator means comprise an electric servomotor rigidly mounted to the return arm and having a worm meshing with said gear to cause the rotation of said threaded rod and the micrometric translation of said worm as well as said slider and said pin.

Conveniently, the electric servomotor receives power by a power source with the interposition of a shunting switch placed on a control panel mounted at the free end of said stick in a position that can be easily accessed by the pilot.

Advantageous embodiments of the invention are obtained in accordance with the dependent claims.

### Brief description of the drawings

Further features and advantages of the invention will be more apparent from the detailed description of a preferred, non-exclusive embodiment of an assisted collective pitch control system for a helicopter rotor, which is described as a non-limiting example with the help of the annexed drawings, in which:
FIG. 1 is a general perspective view of a helicopter on which a collective pitch control system of the invention is mounted;
FIG. 2 is a side view of the helicopter rotor in the first operating step in which the collective pitch control stick is fully lowered and the blades have a substantially neutral mean pitch;
FIG. 3 is a side view of the helicopter rotor in the second operating step in which the collective pitch control stick is partially raised, increasing the mean pitch of the blades that exert an intermediate lift;
FIG. 4 is a side view of the helicopter rotor in the third operating step in which the collective pitch control stick is fully raised, increasing the mean pitch of the blades to a maximum value to exert a high lift on the rotor;
FIG. 5 is an enlarged view of a detail of FIG. 1 with certain parts outlined by broken lines to illustrate the control system of the invention;
FIG. 6 is an interior perspective view of the control system of the invention as shown in FIG. 5;
FIG. 7 is an exterior side view of the control system of the invention as shown in FIGS. 5 and 6;
FIG. 8 is a top view of the control system as shown in FIGS. 5, 6 and 7;
FIG. 9 is a schematic exterior side view of the system of the invention in an initially idle condition;
FIG. 10 is a schematic side view of the system of FIG. 9 in a first operating step in which the collective stick is pushed down;
FIG. 11 is a schematic side view of the system of FIG. 9 in a second operating step in which the collective stick is pushed further down;
FIG. 12 is a side view of the system of FIG. 9 in a third operating step in which the collective stick is lifted with a given upward force;
FIG. 13 is a side view of the system of FIG. 9 in a fourth operating step in which the collective stick is raised with a greater upward force;
FIG. 14 is a side view of the system of FIG. 9 in a fifth operating step on which the collective stick is raised to the highest position with an upward force of maximum amplitude;
FIGS. 15 - 17 are schematic interior side views of the system of the invention in three successive operating positions, i.e. upper, intermediate and lower positions respectively, corresponding to downward thrusts on the collective stick with forces of different increasing magnitude;
FIG. 18 is a perspective view of a detail of the system of the invention.

### Detailed description of a preferred exemplary embodiment

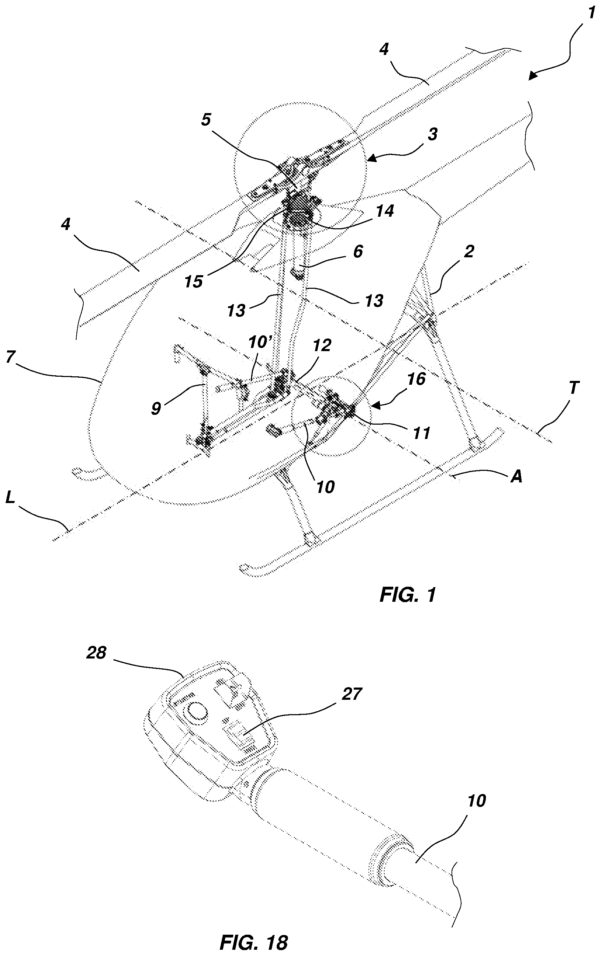

Particularly referring to FIG. 1, a helicopter 1 is schematically shown having, *inter alia,* a frame 2, a rotor 3 with two blades 4 connected to a hub 5 fixed to the upper end of a central shaft or mast 6, a cab 7 with a pilot seat and a passenger seat, not shown.

The helicopter generally defines a longitudinal axis L and a transverse axis T.

A stick 10 is mounted inside the cab 7, on a side portion of the frame 2, typically on the left side of the pilot seat, for controlling the collective pitch of the blades 4 of the rotor 3. A cyclic pitch control 9, not covered by the present invention and not described below, is placed in a central position.

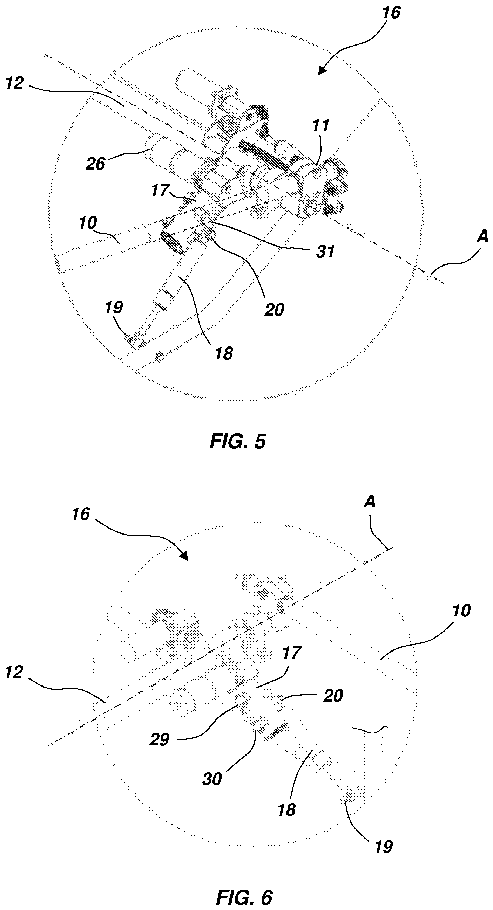

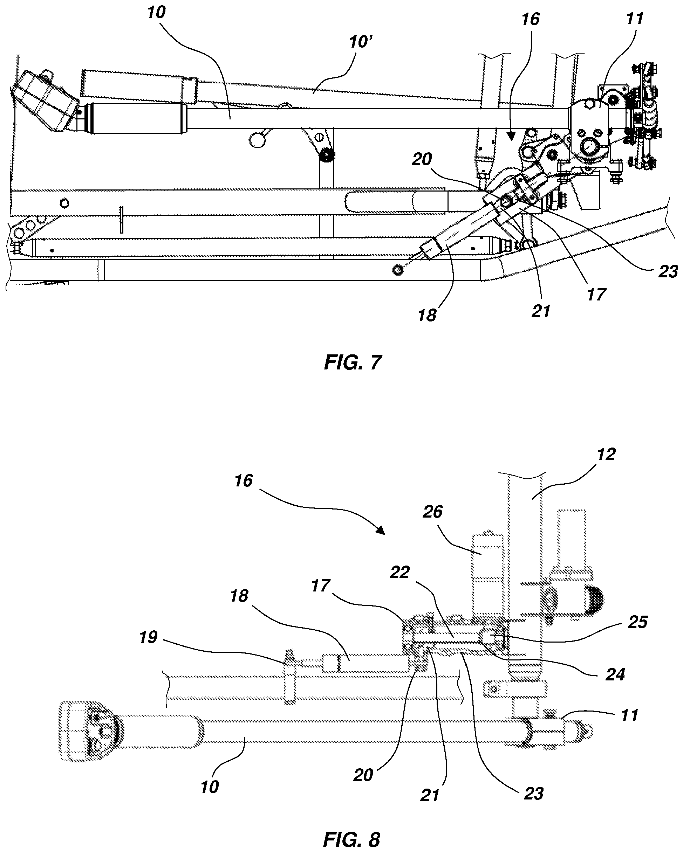

As best shown in FIGS. 5 - 8, the stick 10 is fixed by means of a clamp 11 to the outer end of a shaft 12, which is in turn mounted to bearings to rotate about an axis A substantially parallel to the transverse axis T.

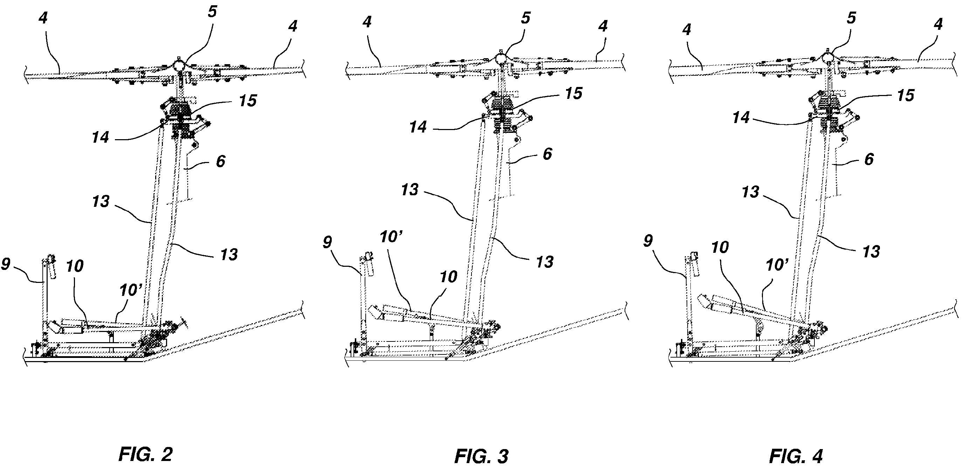

Return brackets, not shown, are fixed to the inner end of the shaft 12 and have the lower ends of substantially vertical rods 13 hinged thereon, the upper ends of such vertical rods being connected to a lower swashplate 14 which cooperates with an upper swashplate 15, connected to the blades 4 by connecting rods and calipers, as best shown in FIGS. 2 to 4.

In the embodiment as shown in FIG. 1, a second stick 10' is fixed proximate to the inner end of the shaft 12 and can be typically actuated by a possible second pilot or a passenger at his/her side, which is connected like the first stick to the fixed lower swashplate 15 as described above.

Operably, by raising the stick 10 and rotating it clockwise about the axis A, the lower swashplate 14 is raised, which pushes the upper swashplate 15 upwards to change the angle of attack of the blades 4 relative to the rotation plane of the rotor.

FIGS. 2-4 schematically show the interaction of the stick 10 with the blades 4 of the rotor 5.

In FIG. 2, the stick 10 is in a fully lowered position, and the blades 4 accordingly have the minimum collective pitch, i.e. the neutral collective pitch which does not generate any lift on the rotor. In FIG. 3 the stick 10 is in an intermediate position and the blades 4 accordingly have a collective pitch with an intermediate mean inclination value, in FIG. 4 the stick 10 is in a fully raised position and the blades 4 accordingly have a collective pitch and a maximum inclination to impart the maximum lift and lifting and/or progression force to the helicopter.

As already known from the background art, the stick 10 is acted upon by elastic means, as described in greater detail below, which are adapted to exert an auxiliary upward force F or downward force F', tending to reduce the pilot's effort during the flight.

According to the invention, servo-assisted adjustment means are provided, generally referenced 16, which can be controlled by the pilot on the ground and/or during the flight and are adapted to act upon the elastic means to instantaneously change the point of application of the auxiliary force on the stick 10, to maintain it in an equilibrium position during hovering or during flight transients.

For this purpose, a connecting arm 17, of limited length and preferably of tubular shape, is rigidly fixed proximate to the outermost end of the shaft 12 and extends radially and perpendicular to the transverse axis A and is axially offset from the stick 10.

The elastic means comprise a compression spring 18 with one end articulated by a bolt or similar member on a fixed point 19 of the helicopter frame 2 and the opposite end fixed to a pin 20 associated with the connecting arm 17 and defining the point of application of the spring return force.

Preferably, spring 18 is a gas compression spring, but may also be of different type, for example a helical or magnetic spring.

The pin 20 is mounted to a slider 21 designed to slidingly move along the connecting arm 17 and having internal threads.

In order to change the position of the point of application of the auxiliary force, actuator means are provided which act upon the slider 21 to adjust the position of the pin 20 along the arm.

In one embodiment, the actuator means comprise a rotating rod 22 mounted inside the arm 17 parallel to its longitudinal axis.

The rotating rod 22 is externally threaded and the internal threads of the slider 21 engage thereupon. The latter is locked in its rotation by the pin 20 that projects out of a slot 23 formed in the tubular connecting arm 17.

A helical gear 24 is keyed to the upper end of the rotating rod 22 and meshes with a worm 25 of equal pitch which is keyed to the shaft of an electric servomotor 26, preferably of the DC brushless type, secured to the connecting arm 17.

Thus, the rotation of the servomotor 26 causes the rotation of the rotating rod 22 which in turn drags the slider 21 along the arm 17, promoting the displacement of the point of application of the auxiliary force F.

Due to the gear ratio of the worm screw 25 to the helical gear 24 and the thread pitch of the rotating rod 22 and the slider 21, the translation of the pin 20 is micrometric, affording a highly accurate adjustment of the point of application of the spring 18.

Conveniently, the electric servomotor 26 receives power from a power source, that can be embodied by the batteries of the helicopter, not shown, with the interposition of an electric switch 27 located on a control panel 28 mounted to the free end of the sticks 10 in a position that can be easily accessed by the pilot.

Preferably, the switch 27 is a rocker switch of the (on)-off-(on) type, with a stable central position and end positions designated UP and DOWN.

By pressing the push-button of the switch 27 UP and DOWN, the servomotor 26 will be rotated in either direction to micrometrically change the point of application of the auxiliary force upwards or downwards as needed by the pilot.

Thanks to the adjustment system 16 and the corresponding kinematic chain as described above, the actuator means act upon the slider 21, and hence upon the pin 20, to translate it between a bottom end position, in which the length of the spring 18 is minimum, and the compression force is maximum, and a top end position in which the length of the spring 18 is maximum and the compression force is minimum.

Furthermore, the pin 20 and the shaft 12 are in such geometric arrangement as to cause a variation of the lever arm between the reaction force of the spring and the axis of the shaft 12, with entails a variation of the torque acting on the stick 10.

At the aforementioned top and bottom end positions, respective upper 29 and lower microswitches 30 are located, which provide limit stop positions for the translation of the slider 21.

As a precautionary measure, a mechanical upper limit stop 31 is also provided in the event of failure or breakdown of the upper microswitch 29.

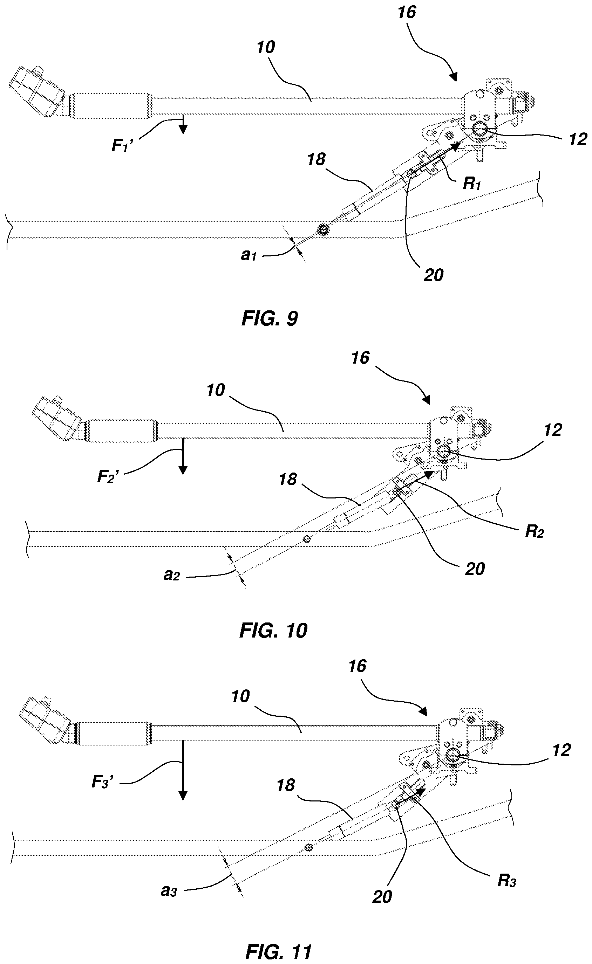

The aforementioned positions of the system 16 are best described with reference to FIGS. 9-14, considering that the auxiliary force acting on the stick 10 depends on the torque generated by the reaction force R of the spring 18 applied to the pin 20 with the arm defined by the distance between the action line of the reaction force R and the parallel line that passes through the axis of the torque shaft 12.

The force F acting on the stick 10 will be directed upwards if the torque acts clockwise when viewing the system 16 from outside the helicopter, and the force F' will be directed downwards if the torque acts counter-clockwise when viewing the system 16 from the same point of view.

FIGS. 9-11 relate to the fully lowered position of the stick 10, like when a helicopter is on the ground or during the descent.

FIG. 9 shows the initial fully lowered position of the stick 10 of the system in which the pin 20 is close to the lower limit stop 30, the reaction force R₁ of the spring 18 is maximum, the arm a₁ is almost zero, and hence the force F₁ acting on the stick 10 is substantially zero or a very limited downward force, sufficient to keep the blades 4 in a neutral pitch condition.

In FIG. 10 the system is illustrated in the condition in which the pin 20 is moved upward in an intermediate position between the two limit stops 29, 30, the reaction force R₂ of the spring 18 is intermediate, the arm a₂ is greater than a₁, and hence the auxiliary force F₂' acting on the stick 10 is directed downwards by an amount greater than F₁' to assist the pilot during the descent.

In FIG. 11 the system 16 is illustrated in the state in which the application point 20 is displaced toward the upper limit stop 29, the reaction force R₃ of the spring 18 is slightly less than R₂, but the lever arm as is greater than a₂, and hence the auxiliary force F₃' acting on the stick and directed downwards is greater than F₂' to further facilitate the descent of the aircraft.

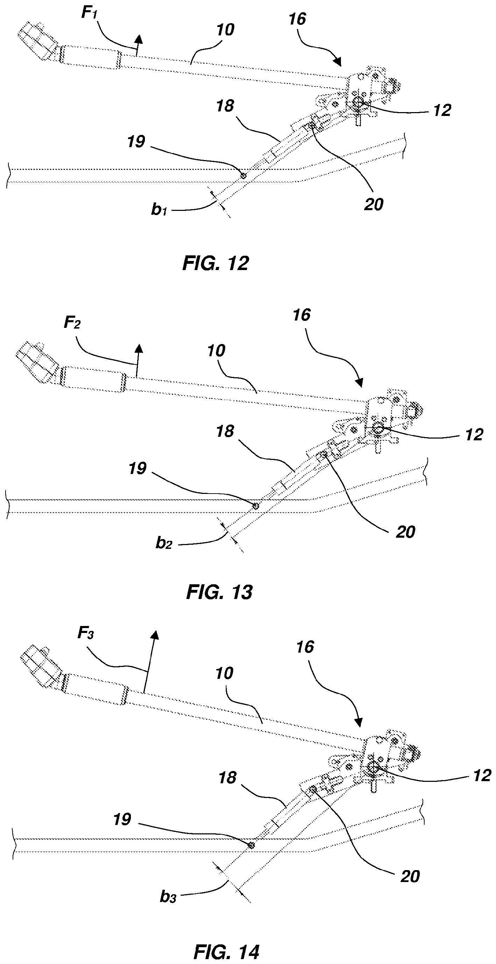

FIGS. 12-14 relate to the position of the stick 10 as it is progressively raised, like during takeoff and climbing of the helicopter.

In FIG. 12 the system 16 is illustrated in the condition in which the stick 10 is partially raised, the pin 20 is fully displaced toward the upper limit stop 29, the reaction force R₁ of the spring 18 is minimal and the lever arm b₁ has a lower value, and hence the auxiliary force F₁ acting on the stick and directed upwards is very low.

In FIG. 13 the system 16 is illustrated in the condition in which the stick 10 is further raised, the pin 20 is moved downwards to an intermediate position between the upper 29 and lower limit stops 30, the reaction force R₂ of the spring 18 is greater than R₁, the lever arm b₂ has a value greater than b₁, and hence the auxiliary force F₂ acting on the stick 10 is directed upwards by an intermediate amount greater than F₁.

In FIG. 14 the system 16 is illustrated in the condition in which the stick 10 is raised even higher, the pin 20 is moved down proximate to the lower limit stop 30, the reaction force R₃ of the spring 18 is maximum, the lever arm b₃ is greater than b₂ and the auxiliary upward force F₃ acting on the stick 10 is greater than F₂.

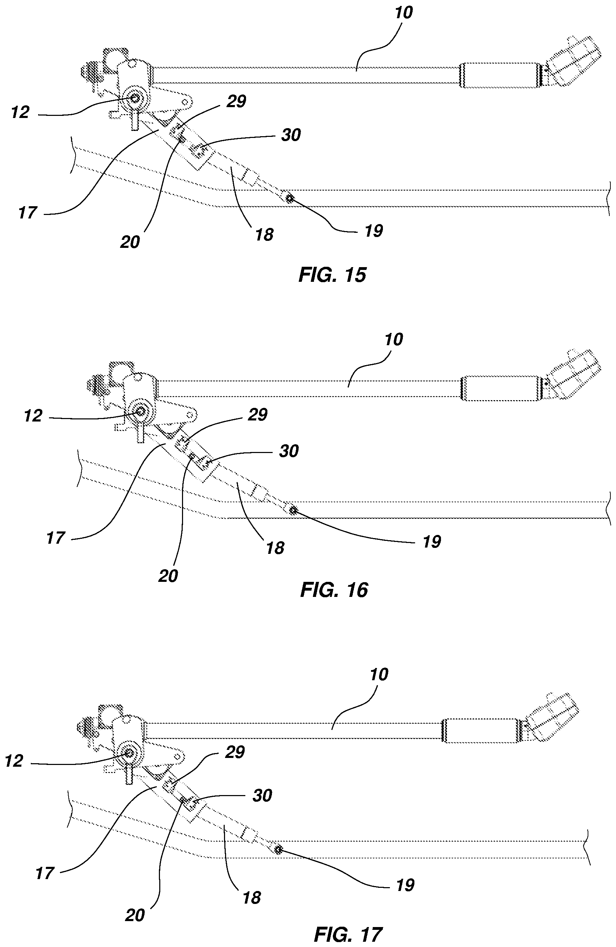

FIGS. 15-17 are views of the system from inside of the helicopter at the positions as depicted in FIGS. 9-12 to show the relative positions of the pin 20 with respect to the limit stops 29, 30.

FIG. 18 shows the bush button control panel 28 located at the end of the stick 10 and having the shunt switch 27 for instantaneous actuation of the servomotor 26 by the pilot toward the UP and DOWN positions respectively with reference to the auxiliary force acting on the stick 10.

In use, the pilot may use the servo-assisted collective pitch control system of the invention as described below.

Once the motor/rotor rpm has been stabilized at 100% by the automatic throttle system, the pilot will progressively raise the collective stick to move the aircraft to a fixed point position a few meters above the ground.

Once this position has been stabilized, the pilot will feel a tendency to instability on the collective control which, depending on the weight of the entire helicopter, may translate into the collective stick tending to rise in low-load situations or to descend in higher-load situations.

At this point the pilot will act on the switch 27 to eliminate this tendency of the collective stick 10. Therefore, if the collective tends to go up, then he/she will actuate the control in the DOWN direction, whereas if it tends to go down, he/she will operate in the UP direction.

This operation will allow him/her to keep the stick in the neutral position without any tendency to increase or lose altitude, therefore he/she can maintain the hovering position with no effort on the controls for as long as necessary.

This procedure can also be carried out in a forward flight when, once the cruise speed has been set, the pilot will act again on the shunt switch 27 to restore a new neutral position of the collective bar, which will no longer be the previously set position due to flight dynamics.

Also, in this case the pilot can maintain the flight altitude without exerting any effort on the collective stick, which will make the flight more comfortable and relaxing, and also allow him/her to disengage his/her left hand during piloting in maximum safety conditions.

In any case, the pilot can act on the collective stick 10 and its control priority will not be lost due to the presence of the collective servo control.

It will be appreciated from the foregoing that the assisted collective pitch control for a helicopter rotor of the invention fulfills the intended objects and namely can effectively assist the pilot in flight maneuvers.

The assisted collective pitch control system of the invention is susceptible of a number of changes and variants, within the scope defined by the wording of the appended claims.

While the system has been described with particular reference to the accompanying figures, the numerals referred to in the disclosure and claims are only used for the sake of a better intelligibility of the invention and shall not be intended to limit the claimed scope in any manner.

### Industrial Applicability

The present invention may find application in industry because it can be produced on an industrial scale in the aviation industry.

## Claims

1. An assisted collective pitch control system for a helicopter rotor, wherein the helicopter (1) comprises a frame (2) defining a longitudinal axis (L) and a transverse axis (T), which system comprises:
- at least one collective pitch stick (10) rotatably mountable to the helicopter frame (2) to rotate about an axis (A) substantially parallel to said transverse axis (T);
- elastic means acting on said at least one stick (10) to exert thereon an auxiliary force (F, F') tending to reduce the pilot's effort,
wherein said at least one stick (10) has one end rigidly fixed to a shaft (12) which is mounted to rotate about said transverse axis (T);
wherein said shaft (12) is rigidly joined to a connecting arm (17) substantially perpendicular to said transverse axis (T) and axially offset from said at least one stick (10);
wherein said elastic means comprise a spring (18) with one end to be articulated on a fixed point (19) of the helicopter frame and the opposite end fixed to a pin (20) associated with said connecting arm (17) to define the point of application of the reaction force of said spring (18);
**characterized by** comprising a slider (21) slidingly mounted to said connecting arm (17), said pin (20) being mounted to be rigidly joined to said slider (21), the system further comprising assisted adjustment means (16) adapted to be controlled by the pilot during the flight and acting on said slider (21) to move said elastic means in such a manner to instantaneously change the point of application (19) of said auxiliary force (F, F') on said at least one stick (10).

2. System as claimed in claim 1, **characterized in that** it comprises actuator means acting on said slider (21) to instantaneously adjust the position of said pin (20) along said arm (17) and to accordingly change the point of application of the reaction force (R) of said spring (18).

3. System as claimed in claim 2, **characterized in that** said actuator means comprise a rod (22) that is rotatably mounted to said arm (17) parallel to its longitudinal axis, said rod (22) being externally threaded and having a helical gear (24) at one end distal with respect to said slider.

4. System as claimed in claim 3, **characterized in that** said slider (21) is locked in its rotation by said pin (20) which projects from a lateral slot (23) of the connecting arm (17) and is internally threaded to engage the external threads of said rod (22).

5. System as claimed in claim 2, **characterized in that** said actuator means comprise an electric servomotor (26) mounted to said connecting arm (17).

6. System as claimed in any of claims 3 to 5, **characterized in that** said electric servomotor (26) is associated with a worm (25) which meshes with said gear (24) to cause the rotation of said rod (22) and as a result the micrometric translation of said slider (21) and said pin (20).

7. System as claimed in claim 5, **characterized in that** said electric servomotor (26) receives power from a power source with the interposition of a shunting switch (27) located on a push button control panel (28) mounted at the free end of said at least one stick (10) that can be easily accessed by the pilot.

8. System as claimed in claim 1, **characterized in that** said spring (18) is a compression spring and is selected from the group including gas springs, helical mechanical springs and magnetic springs.

9. System as claimed in claim 2, **characterized in that** said actuator means act upon on said slider (21) to displace it between a bottom end position in which the length of the spring (18) is minimum and the reaction force (R) is maximum, and an upper end position in which the length of the spring (18) is maximum and the reaction force (R) is minimum.

10. System as claimed in claim 9, **characterized in that** in said bottom and upper end positions there are provided lower and upper limit stop microswitches (29, 30) to control the power supply to said servomotor (26) in a given direction of rotation.

11. System as claimed in claim 10, **characterized in that** it comprises a micrometrically adjustable upper mechanical limit stop (31) adapted to prevent the translation of said slider (21) beyond said upper limit stop microswitch (29) in the event of failure or breakdown thereof.

## Patentansprüche

1. Unterstütztes kollektives Pitch-Steuerungssystem für einen Hubschrauberrotor, wobei der Hubschrauber (1) einen Rahmen (2) umfasst, der eine Längsachse (L) und eine Querachse (T) definiert, wobei das System umfasst:
- mindestens einen kollektiven Pitch-Knüppel (10), der drehbar an dem Hubschrauberrahmen (2) angebracht werden kann, um sich um eine Achse (A) zu drehen, die im Wesentlichen parallel zu der Querachse (T) verläuft;
- elastische Mittel, die auf den mindestens einen Steuerknüppel (10) einwirken, um auf diesen eine Hilfskraft (F, F') auszuüben, die die Anstrengung des Piloten verringern soll,
wobei der mindestens eine Steuerknüppel (10) mit einem Ende starr an einer Welle (12) befestigt ist, die drehbar um die Querachse (T) angebracht ist;
wobei die Welle (12) starr mit einem Verbindungsarm (17) verbunden ist, der im Wesentlichen senkrecht zu der Querachse (T) und axial versetzt zu dem mindestens einen Steuerknüppel (10) verläuft;
wobei die elastischen Mittel eine Feder (18) umfassen, deren eines Ende an einem festen Punkt (19) des Hubschrauberrahmens angelenkt ist und deren gegenüberliegendes Ende an einem mit dem Verbindungsarm (17) verbundenen Stift (20) befestigt ist, um den Angriffspunkt der Reaktionskraft der Feder (18) zu definieren
**dadurch gekennzeichnet, dass** es einen Schieber (21) umfasst, der gleitend an dem Verbindungsarm (17) angebracht ist, wobei der Stift (20) so angebracht ist, dass er starr mit dem Schieber (21) verbunden ist, wobei das System ferner unterstützte Einstellmittel (16) umfasst, die so beschaffen sind, dass sie von dem Piloten während des Fluges gesteuert werden können und auf den Schieber (21) einwirken, um die elastischen Mittel so zu bewegen, dass der Angriffspunkt (19) der Hilfskraft (F, F') auf den mindestens einen Steuerknüppel (10) augenblicklich geändert wird.

2. System nach Anspruch 1, **dadurch gekennzeichnet, dass** es Betätigungsmittel umfasst, die auf den Schieber (21) wirken, um die Position des Stifts (20) entlang des Arms (17) augenblicklich einzustellen und den Angriffspunkt der Reaktionskraft (R) der Feder (18) entsprechend zu ändern.

3. System nach Anspruch 2, **dadurch gekennzeichnet, dass** die Betätigungsmittel eine Stange (22) umfassen, die drehbar an dem Arm (17) parallel zu seiner Längsachse angebracht ist, wobei die Stange (22) ein Außengewinde und ein schraubenförmiges Zahnrad (24) an einem Ende aufweist, das in Bezug auf den Schieber distal ist.

4. System nach Anspruch 3, **dadurch gekennzeichnet, dass** der Schieber (21) in seiner Drehung durch den Stift (20) blockiert ist, der aus einem seitlichen Schlitz (23) des Verbindungsarms (17) herausragt und ein Innengewinde aufweist, um in das Außengewinde der Stange (22) einzugreifen.

5. System nach Anspruch 2, **dadurch gekennzeichnet, dass** die Betätigungsmittel einen elektrischen Servomotor (26) umfassen, der an dem Verbindungsarm (17) angebracht ist.

6. System nach einem der Ansprüche 3 bis 5, **dadurch gekennzeichnet, dass** der elektrische Servomotor (26) mit einer Schnecke (25) verbunden ist, die in das Zahnrad (24) eingreift, um die Drehung der Stange (22) und infolgedessen die mikrometrische Verschiebung des Schiebers (21) und des Stifts (20) zu bewirken.

7. System nach Anspruch 5, **dadurch gekennzeichnet, dass** der elektrische Servomotor (26) von einer Stromquelle unter Zwischenschaltung eines Rangierschalters (27) gespeist wird, der sich auf einem Druckknopf-Bedienfeld (28) befindet, das am freien Ende des mindestens einen Steuerknüppels (10) angebracht und für den Piloten leicht zugänglich ist.

8. System nach Anspruch 1, **dadurch gekennzeichnet, dass** die Feder (18) eine Druckfeder ist und aus der Gruppe ausgewählt ist, die Gasfedern, mechanische Schraubenfedern und Magnetfedern umfasst.

9. System nach Anspruch 2, **dadurch gekennzeichnet, dass** die Betätigungsmittel auf den Schieber (21) einwirken, um ihn zwischen einer unteren Endposition, in der die Länge der Feder (18) minimal und die Reaktionskraft (R) maximal ist, und einer oberen Endposition, in der die Länge der Feder (18) maximal und die Reaktionskraft (R) minimal ist, zu verschieben.

10. System nach Anspruch 9, **dadurch gekennzeichnet, dass** in der unteren und oberen Endstellung untere und obere Endanschlag-Mikroschalter (29, 30) vorgesehen sind, um die Stromversorgung des Servomotors (26) in einer bestimmten Drehrichtung zu steuern.

11. System nach Anspruch 10, **dadurch gekennzeichnet, dass** es einen mikrometrisch einstellbaren oberen mechanischen Endanschlag (31) umfasst, der geeignet ist, die Verschiebung des Läufers (21) über den oberen Endanschlag-Mikroschalter (29) hinauszuverhindern, falls dieser versagt oder ausfällt.

## Revendications

1. Système de commande assistée de pas collectif pour un rotor d'hélicoptère, dans lequel l'hélicoptère (1) comprend un cadre (2) définissant un axe longitudinal (L) et un axe transversal (T), lequel système comprend :
- au moins une barre de pas collectif (10) pouvant être monté rotatif sur le châssis (2) de l'hélicoptère pour tourner autour d'un axe (A) sensiblement parallèle audit axe transversal (T) ;
- des moyens élastiques agissant sur ledit au moins une barre (10) pour exercer sur la même une force auxiliaire (F, F') tendant à réduire l'effort du pilote,
dans lequel ledit au moins une barre (10) a une extrémité rigidement fixée à un arbre (12) qui est monté pivotant autour dudit axe transversal (T);
dans lequel ledit arbre (12) est rigidement relié à un bras de connexion (17) sensiblement perpendiculaire à l'axe transversal (T) et axialement décalé par rapport à l'au moins une barre (10) ;
dans lequel lesdits moyens élastiques comprennent un ressort (18) dont une extrémité est articulée sur un point fixe (19) du châssis de l'hélicoptère et dont l'extrémité opposée est fixée à un axe (20) associé audit bras de liaison (17) pour définir le point d'application de la force de réaction dudit ressort (18) ;
**caractérisé en ce qu'**il comprend un curseur (21) monté coulissant sur ledit bras de liaison (17), ledit axe (20) étant monté solidaire dudit curseur (21), le système comprenant en outre des moyens de réglage assistés (16) adaptés pour être commandés par le pilote pendant le vol et agissant sur ledit curseur (21) pour déplacer lesdits moyens élastiques de manière à modifier instantanément le point d'application (19) de ladite force auxiliaire (F, F') sur ledit au moins une barre (10).

2. Système selon la revendication 1, **caractérisé en ce qu'**il comprend des moyens d'actionnement agissant sur ledit curseur (21) pour ajuster instantanément la position de ladite goupille (20) le long dudit bras (17) et pour modifier en conséquence le point d'application de la force de réaction (R) dudit ressort (18).

3. Système selon la revendication 2, **caractérisé en ce que** lesdits moyens d'actionnement comprennent une tige (22) qui est montée pivotante sur ledit bras (17) parallèlement à son axe longitudinal, ladite tige (22) étant filetée extérieurement et ayant un engrenage hélicoïdal (24) à une extrémité distale par rapport audit curseur.

4. Système selon la revendication 3, **caractérisé en ce que** ledit curseur (21) est bloqué dans sa rotation par ladite goupille (20) qui fait saillie d'une fente latérale (23) du bras de liaison (17) et est filetée intérieurement pour s'engager dans les filets extérieurs de ladite tige (22).

5. Système selon la revendication 2, **caractérisé en ce que** les moyens d'actionnement comprennent un servomoteur électrique (26) monté sur le bras de liaison (17).

6. Système selon l'une quelconque des revendications 3 à 5, **caractérisé en ce que** ledit servomoteur électrique (26) est associé à une vis sans fin (25) qui s'engrène avec ledit engrenage (24) pour provoquer la rotation de ladite tige (22) et, en conséquence, la translation micrométrique dudit curseur (21) et dudit axe (20).

7. Système selon la revendication 5, **caractérisé en ce que** ledit servomoteur électrique (26) est alimenté par une source d'énergie avec l'interposition d'un interrupteur shunt (27) situé sur un panneau de commande à bouton-poussoir (28) monté à l'extrémité libre dudit au moins une barre (10) auquel le pilote peut facilement accéder.

8. Système selon la revendication 1, **caractérisé en ce que** ledit ressort (18) est un ressort de compression et est choisi dans le groupe comprenant les ressorts à gaz, les ressorts mécaniques hélicoïdaux et les ressorts magnétiques.

9. Système selon la revendication 2, **caractérisé en ce que** les moyens d'actionnement agissent sur le curseur (21) pour le déplacer entre une position finale inférieure dans laquelle la longueur du ressort (18) est minimale et la force de réaction (R) est maximale, et une position finale supérieure dans laquelle la longueur du ressort (18) est maximale et la force de réaction (R) est minimale.

10. Système selon la revendication 9, **caractérisé en ce que** dans lesdites positions d'extrémité inférieure et supérieure sont prévus des micro-interrupteurs de fin de course inférieure et supérieure (29, 30) pour contrôler l'alimentation électrique dudit servomoteur (26) dans un sens de rotation donné.

11. Système selon la revendication 10, **caractérisé en ce qu'**il comprend une butée mécanique supérieure réglable micrométriquement (31) adaptée pour empêcher la translation dudit curseur (21) au-delà dudit micro-interrupteur de butée supérieure (29) en cas de défaillance ou de panne de celui-ci.
